# EUROPEAN PATENT SPECIFICATION

(11) **EP 3 346 384 B1**
(45) Date of publication and mention of the grant of the patent: **04.03.2020**
(21) Application number: 17150819.5
(22) Date of filing: 10.01.2017
(51) Int. Cl.: G06F 11/07, G06F 11/22, G06F 11/30

(54) **INDUSTRIAL DEVICE FAULT MANAGEMENT IN A COMMUNICATIONS SYSTEM**
FEHLERVERWALTUNG EINER INDUSTRIELLEN VORRICHTUNG IN EINEM KOMMUNIKATIONSSYSTEM
GESTION DE DÉFAILLANCE DE DISPOSITIF INDUSTRIEL DANS UN SYSTÈME DE COMMUNICATIONS

(43) Date of publication of application: 11.07.2018
(73) Proprietor: ABB Schweiz AG, 5400 Baden (CH)
(72) Inventor: Hu, Zhongliang, 00380 Helsinki (FI); Jakobsson, Martti, 00380 Helsinki (FI); Kujala, Mikko, 00380 Helsinki (FI)
(74) Representative: Kolster Oy Ab

(56) References cited:
- EP-A1- 3 101 777
- WO-A1-2015/171581
- US-A1- 2012 226 619
- US-A1- 2016 077 910

## Description

### FIELD OF THE INVENTION

The invention relates to a communications system, and particularly to performing fault management regarding an industrial automation device.

### BACKGROUND

The following background description art may include insights, discoveries, understandings or disclosures, or associations together with disclosures not known to the relevant art prior to the present invention but provided by the present disclosure. Some such contributions disclosed herein may be specifically pointed out below, whereas other such contributions encompassed by the present disclosure the invention will be apparent from their context.

Frequency converters are used to change frequency and magnitude of electricity supplied to a load. Frequency converters are being used, for example, in alternating current (AC) motor drives. In exemplary operation, a frequency converter receives AC current from an electrical power supply and converts the frequency of the received AC current to another frequency after which the AC current is supplied to an AC electric motor. Also further parameters, for example, a voltage level of the received AC current may be changed. The AC motors are used in various applications including, for example, fans and pumps. In many applications the use of frequency converters may provide significant energy savings compared to supplying electrical power having a constant frequency. Document US-A1-2016/0077910 discloses a system and a method for providing software supportability involve a server receiving a first electronic record from a client application on a mobile computing device. The first electronic record describes activity that occurred at the mobile computing device during a request sent from the client application to the server. The server creates a second electronic record that describes activity that occurred at the server while processing the request. The first electronic record and the second electronic record are stored in association with each other and can be analysed to determine issues with performance or security. A diagnostic application, based on the stored first electronic record and the second electronic record, identifies at least one faulty component at the server or the mobile computing device to correct the identified at least one faulty component.

Document EP-A1-3 101 777 discloses a method which comprises receiving, in a local terminal device of a communication system, a set of instructions related to a frequency converter, the set of instructions having been transmitted from a remote terminal device via at least one network node. The local terminal device displays information on the received set of instructions. The local terminal device may detect a predetermined user input, and in response to the detecting, the local terminal device causes transmission of control data to the frequency converter via a communications link established between the local terminal device and the frequency converter, if the user input indicates that the user of the local terminal device approves the execution of the set of instructions in the frequency converter, the control data commanding the frequency converter to execute the set of instructions in the frequency converter.

### SUMMARY

The following presents a simplified summary of features disclosed herein to provide a basic understanding of some exemplary aspects of the invention. This summary is not an extensive overview of the invention. It is not intended to identify key/critical elements of the invention or to delineate the scope of the invention. Its sole purpose is to present some concepts disclosed herein in a simplified form as a prelude to a more detailed description.

According to an aspect, there is provided the subject matter of the independent claims 1,13,14 and 15.

Embodiments are defined in the dependent claims.

One or more examples of implementations are set forth in more detail in the accompanying drawings and the description below. Other features will be apparent from the description and drawings, and from the claims.

Some embodiments provide a method, system, apparatus and a computer program product for fault management of an automated power conversion device.

### BRIEF DESCRIPTION OF THE DRAWINGS

In the following the invention will be described in greater detail by means of preferred embodiments with reference to the attached drawings, in which
Figure 1 illustrates a wireless communication system to which embodiments of the invention may be applied;
Figure 2 is a signalling diagram of a procedure for device fault management according to an embodiment of the invention;
Figure 3 illustrates a process for device fault management according to an embodiment of the invention;
Figure 4 is a block diagram illustrating an exemplary apparatus.

### DETAILED DESCRIPTION OF THE INVENTION

The following embodiments are exemplary. Although the specification may refer to "an", "one", or "some" embodiment(s) in several locations, this does not necessarily mean that each such reference is to the same embodiment(s), or that the feature only applies to a single embodiment. Single features of different embodiments may also be combined to provide other embodiments. Furthermore, words "comprising" and "including" should be understood as not limiting the described embodiments to consist of only those features that have been mentioned and such embodiments may contain also features/structures that have not been specifically mentioned.

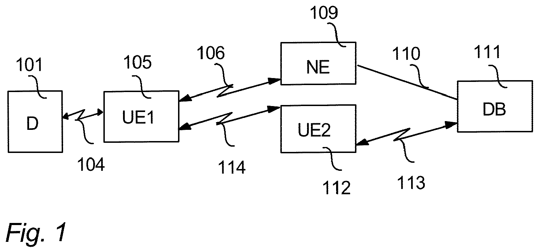

Figure 1 illustrates a wireless communication scenario to which embodiments of the invention may be applied. Referring to Figure 1, an example of a radio system to which embodiments of the invention may be applied, is based on LTE network elements. However, an embodiment is not limited to the LTE radio communications systems but may also be implemented in other radio communications systems, such as 3G, 4G, 5G, LTE-A, UMTS (universal mobile telecommunications system), EDGE, WCDMA, Bluetooth network, WLAN or any other mobile or wireless network. In an embodiment, the presented solution may be applied between user equipment belonging to different but compatible systems such as LTE and UMTS.

A general architecture of a communication system is illustrated in Figure 1. Figure 1 illustrates a simplified system architecture only showing some elements and functional entities, all being logical units whose implementation may differ from what is shown. The connections shown in Figure 1 are logical connections; the actual physical connections may be different. It is apparent to a person skilled in the art that the systems also comprise other functions and structures. It should be appreciated that the functions, structures, elements, and protocols used in or for wireless communication are irrelevant to the actual invention. Therefore, they need not be discussed in more detail here.

Figure 1 illustrates a communication system according to an embodiment. Figure 1 illustrates an exemplary communications system in which a computing apparatus such as a user terminal 105 is able to connect to a network node (network element NE) such as a cloud server 109 and to an automated power conversion device such as a drive 101. The user terminal 105 may be a local terminal device (local device) UE1 located on-site at a close proximity of the drive 101. The local terminal device 105 may comprise a user equipment UE1 such as a smartphone, mobile phone, tablet computer or laptop computer. A connection 106 of the local terminal device 105 to the network node 109 may be provided by a cellular, wireless or wired link. A connection 104 of the local terminal device 105 to the drive 101 may be provided e.g. by a Bluetooth, WLAN, NFC (near field communication), or inductive connection (such as an inductive connection according to an inductive power standard (Qi) by the Wireless Power Consortium). It is also possible that the connection 104 of the local terminal device 105 to the drive 101 is a wired connection implemented e.g. by means of a universal serial bus (USB).

The network node 109 may be a remote computing apparatus comprising or being connected to a remote terminal device UE2 112, server NE 109 or database DB 111 located at a service center, for facilitating service and maintenance of the drive 101. The remote apparatus(es) may facilitate different ways of how to communicate with the drive 101 via the local terminal device 105. The remote device 109, 111, 112 may comprise e.g. a server, database, desktop computer, laptop computer, tablet computer, smartphone, mobile phone, etc. Any suitable technology that makes it possible to store drive data, drive fault data and drive fault debugging data into a service center database 111 may be utilized. For example, a cloud service (cloud computing) may be used via the internet to store drive data, fault data and drive fault debugging data into the service center database 111. The local and remote apparatuses may be capable of communicating with each other via the connection 106, 110, 113, 114 by utilizing the cloud service e.g. via the internet. It is also possible that the remote terminal device UE2 112, server NE 109 and/or database DB 111 are located on-site near the device 101. The actual physical location of the cloud service/cloud server is not relevant to the embodiment, but instead the remote terminal device UE2 112, server NE 109 and/or database DB 111 may be located in any convenient location.

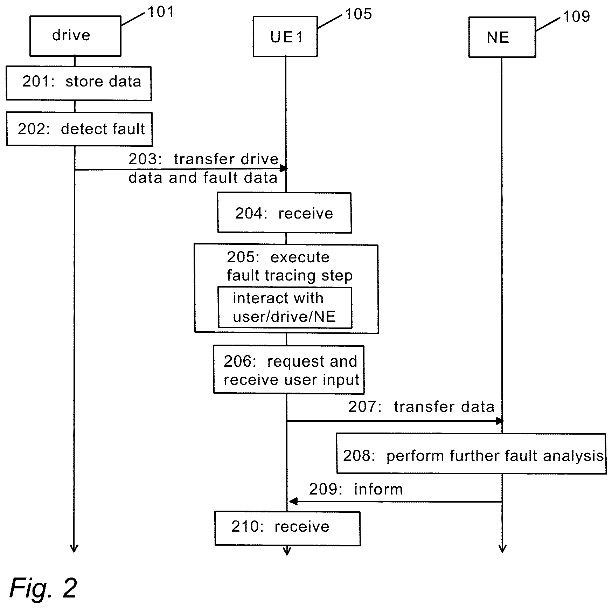

Let us now describe embodiments of the invention with reference to Figure 2. Figure 2 is a signalling diagram illustrating a computerized method for drive fault management in network node a communications system. The network node 105, 109, 111, 112 may be a terminal device, user equipment, host computer, server computer, base station, access node or any other network element. For example, the server computer or the host computer may generate a virtual network through which the host computer communicates with the terminal device.

Referring to Figure 2, the drive 101 is configured to store (block 201) data related to various internal variables and key performance indicators (KPI) about the condition/status of the frequency converter or the drive system (e.g. power-on time, motor running hours, fan running hours, estimation of the DC (direct current) link capacitor lifetime, load current histogram, temperature (ambient temperature, insulated gate bipolar transistor (IGBT) temperature, control board temperature, etc.), frequency, DC link voltage, current(s), status words, internal control references, etc.). This data in combination with drive identification data may be referred to as drive status data (which may be stored e.g. in an internal memory of the drive). The drive may detect (block 202) an operational fault in the drive and/or in the device (such as a fan, pump) the drive is controlling. The fault or error may also occur in (and/or be detected by) a drive option module such as a fieldbus adapter. The adapter may include its own fault logging system from which the fault data may be transferred to the drive and added to data blocks. The fault data may also originate from a control system such as PLC, and/or the fault data may be collected by the control system. When the fault is detected, the drive is configured to record information on the fault (also referred to as fault log data herein) such as a fault code and possibly other device-recordable data. The drive status data and the fault log data are transmitted (block 203) to the user apparatus 105 via a local communications connection 104 (such as Bluetooth, mobile, wireless, wired, NFC, inductive connection). The drive status data and/or fault log data may be transmitted 203 to the user apparatus 105 automatically when the fault is detected in the drive 101. Alternatively the fault log data and/or the drive status data may be transmitted 203 from the drive 101 to the user apparatus 105 in response to the user apparatus 105 requesting it.

In block 204, the drive status data and the fault log data are received in the user apparatus 105. Based on at least the received fault log data and device status data, the user apparatus 105 is configured to execute (block 205) one or more fault tracing steps related to the drive 101, in order to try to solve the fault situation. The executing 205 of at least one of the fault tracing steps may comprise, for example, outputting a drive related inquiry to a user and receiving a user response to the drive related inquiry, causing the running of one or more operational tests on the drive 101, requesting and receiving further drive related information from the drive 101 via the local connection network 104, requesting and receiving further drive related information from the remote apparatus 109 via the communications network 106, generating and outputting a drive related checklist to the user in respect of the fault, generating and outputting a drive related question to the user in respect of the fault, and/or generating and outputting a suggestion for a corrective action to the user in respect of the fault (instead of or in addition to the drive, these steps may relate to the device the drive is controlling)..

The user apparatus 105 may output (block 206) a request (via an appropriate user interface in the user apparatus) to the user, requesting the user to indicate to the user apparatus 105 whether or not the fault was corrected. If the user indicates (block 206, via an appropriate user interface (e.g. keyboard, touch display, microphone) in the user apparatus 105) to the user apparatus 105 that the drive fault was not corrected, the user apparatus 105 may execute 205 at least one other or updated fault tracing steps related to the drive to try to solve the fault situation. Alternatively/in addition, the user apparatus 105 may cause (block 207) transmission of the fault log data, the device status data, information on the executed fault tracing step(s), and other debugging data (such as user-entered debugging data) related to the drive to a remote apparatus 109 (such as a cloud server), for further analysis of the fault. Despite of whether or not the fault was corrected, the user apparatus may cause (block 207) transmission of the fault log data, the device status data, the information on the executed fault tracing step(s), and the other debugging data to the remote apparatus 109 to be stored 208 in a memory/database 111. At least part of that information may also be stored 206 in an internal memory/database of the user apparatus.

Thus the computing apparatus 105 may interact with at least one of the user, the drive 101 and the remote apparatus 109, 111 to obtain more information on at least the fault and/or the drive 101, and utilize the obtained information when generating/selecting/executing the fault tracing steps.

The fault tracing step executed in the computing apparatus 105 may be selected based on information obtained from one or more earlier device fault tracing steps. This enables providing a self-learning system where the fault tracing steps may be dynamically customized for the drive 101 and the operational fault of the drive 101. This enables performing efficient drive self-diagnosis and drive self-diagnosis information sharing in the communications system.

The method may comprise causing storing, in a memory (e.g. database 111), associated information on one or more of the suggestion for the corrective action, whether or not the fault was corrected, the fault tracing step, the fault log data, the device status data, the further device related information, the device related inquiry and the user response, the operational test, a result of the operational test, the device related checklist, the device related question, user-entered information, other debugging data; the further fault analysis, and a result of the further fault analysis.. The computing apparatus 105 may utilize the stored information later as source information when generating and executing a subsequent fault tracing step related to the same or different drive 101 (and possibly same fault or same type of fault).

The computing apparatus 105 may also output a request to the user, and may detect a user input indicating whether or not the updated fault tracing step enables the drive fault to be corrected.

Despite of whether or not the drive fault was corrected, the computing apparatus 105 causes 207 transmission of the drive data, fault data, and information on the executed fault tracing step(s) and other debugging data to the remote apparatus 109. These may then be stored 208 in the remote apparatus 109 and/or database 111.

In block 208, a further drive fault analysis may be performed in the remote apparatus 109 based on information received from the user apparatus 105 and based on earlier fault, drive, fault tracing and/or debugging related information stored in the remote apparatus 109 and/or database 111. In item 209, the remote apparatus 109 may cause transmission of information on the result of the further fault analysis to the user apparatus 105. In item 210, the user apparatus 105 may receive the information on the result of the further fault analysis, and output said information to the user. This output information may further help the user to try to solve the issue with the drive 101. Based on the information received in step 210, one or more further fault tracing steps 205 may also be performed in the user apparatus 105 if needed/desired.

The message 207 may comprise a request for performing a further fault analysis. If needed, the further fault analysis may also be conducted by the user of the remote user apparatus 112, based on information received 208 from the user apparatus 105 and based on earlier fault, drive, fault tracing and/or debugging related information stored in the remote apparatus 109 and/or database 111. In that case the remote user apparatus 112 may cause transmission of information on the result of the further fault analysis directly to the local user apparatus 105 via the connection 114 or otherwise.

Thus, it is possible to store data in a drive 101. The drive 101 is configured to record selected key parameters and status information, e.g. hours operated and temperature cycles, related to the drive 101. If needed (e.g. a fault appeared in the drive 101), it is possible to establish a communications connection 104 between the drive 101 and a local computing apparatus 105. The local computing apparatus 105 may be a user terminal 105, such as a mobile phone 105, smart phone 105, laptop computer 105, or tablet 105. The data that is stored in the drive 101 may be downloaded/transmitted from the drive 101 to the computing apparatus 105. By analysing the downloaded data in the computing apparatus 105, the computing apparatus 105 is able to automatically generate a series of debugging/troubleshooting procedures (also referred to as a fault tracing steps) based on the current condition of the drive 101. The generated fault tracing steps enable the computing apparatus 105 to interact with the user, the drive 101, a cloud computing apparatus 109 and/or a database 111, to check, test and/or adjust various issues in relation to the drive 101. These steps may include the computing apparatus 105 outputting a series of questions and receiving a user response to them (e.g. questions about drive applications such as a crane application, working environments, connected other systems such as PLC, observations of previous amoralities), the computing apparatus 105 outputting simple recommendations on tests to be initialized by the user (such as recommendations on changing parameters), and trials to find out if the recommendations work. Relevant data (drive parameters, performance, user responses to the questions, environment variables, e.g. location and weather) gathered during this procedure is recorded in the computing apparatus 105. This may already solve the situation with the drive 101. However, if it does not solve the situation with the drive 105, the data above may be transmitted from the computing apparatus 105 to the (possibly remotely located) cloud computing apparatus 109 (such as a database server, service server or cloud server 109) which a drive support team has access to, for further analysis. Thus the data from the drive 101 and the recorded self-debugging data may be made accessible to the drive support team via the cloud server 109. Thereby a support engineer (remote or on-site) is able to understand the condition of the drive 101 immediately by connecting (by means of UE2 112) to the cloud server 109, and the user does not need to repeat the situation. Thus the whole service process may be made much more effective both for the local user and the drive support team.

In an example, the computing apparatus 105 may try to solve an issue that the user is having with the drive 101, by utilizing a drive-specific and fault-specific debugging wizard script comprising one or more fault tracing steps. The computing apparatus 105 requests data from the drive 101 and from the database 111 (e.g. a diagnosis database). The data received in the computing apparatus 105 from the drive 101 comprises e.g. key parameter values and fault logger data which are requested or automatically transmitted from the drive 101 to the computing apparatus 105 using a wireless connection 104 between the drive 101 and the computing apparatus 105. The diagnosis database may be a sub-set of a comprehensive database 111 located in or connected to the cloud server 109. In addition, installation information on the drive 101 may be requested from the database 111 (e.g. from a drive installation database which may be a sub-set of the comprehensive database 111), or, alternatively, it may be queried from the user by the computing apparatus 101. Based on this information, the computing apparatus 105 tries to solve the issue by outputting queries to the user, by performing tests, and/or by outputting solution proposals. This series of steps is intelligently selected in the computing apparatus 105 based on information obtained from previous steps. Between the steps, the computing apparatus 105 may request more data from the cloud server 109 or from the drive 101, if needed. Moreover, the computing apparatus 105 may be configured to cause the drive 101 to perform the tests. The computing apparatus 105 records the steps and the data obtained when performing the steps, and transmits the recorded data to the database 111. The data obtained/transmitted may be later used for solving a subsequent issue with a drive.

In another example, the process starts in the same way as described above. However, after a few steps the user and/or the computing apparatus 105 may conclude 205 that the issue with the drive 101 is not solvable by means of the debugging wizard script. At that point, the computing device may output 206 (e.g. on a display) information indicating to the user, for example, that assistance from a support engineer is required (e.g. when the algorithm is not (anymore) confident about the possible cause of the situation or when it knows that this situation requires help from a support line), and/or the user may decide that the problem was not fixed. Therefore the computing apparatus 105 may comprise a user interface by means of which the user may insert 206 additional information on the drive fault in a form of text, pictures and/or videos to further elaborate the issue. The computing apparatus 105 is configured to cause transmission 207 of the user-inserted information, the drive data, the additional information, and/or information on the recorded solving procedure to the cloud server 109. The support engineer may then try to solve the drive fault issue based on the information received 208 in the cloud server 109 and/or contact the user of UE1 (the support engineer may be the user of the remote computing apparatus UE2 112).

In yet another example, a user (e.g. electrician Mr Li in Shanghai) receives 204 an overcurrent fault notification (including a specific fault code) in his computing apparatus 105 from a drive 101 used control a conveyor belt. The user uses the computing apparatus 105 to connect to the drive 101. In response to the connecting, the computing apparatus 105 uploads/downloads 204 automatically pieces of data, such as 1) used reference speed, motor current, etc. from the drive 105, based on a fault code, 2) relevant information (location, owner) of the particular drive 105 from the drive install database 111, and/or 3) from the diagnosis database 111 information on possible similar issues in similar conditions. Based on the acquired data the computing apparatus 105 creates 205 a stepwise troubleshooting (debugging) wizard script for solving the fault and outputs 205 the script to the user (Mr Li). The user controls the stepwise troubleshooting wizard script to be run in the computing apparatus 105. That may include, for example, the computing apparatus 105 outputting 205 interactive instructions such as instructions to first visually check the cables and connectors. If they are ok, Mr Li indicates to the computing apparatus 105 that the cables and connectors are ok, and the computing apparatus 105 registers this. The second step may be to go through motor parameters. If they are ok, Mr Li indicates this to the computing device 105, and the computing apparatus 105 registers this. The next step may be the computing apparatus 105 outputting interactive instructions to check the drive fans. Mr Li may notice that one of the fans is not rotating, and indicate the observation to the computing apparatus 105, and the computing apparatus 105 registers this. The computing apparatus 105 may output 205 a solution proposal to replace the fan. If the fan replacement enables to fix the fault, Mr Li may confirm 206 the fixing to the computing apparatus 105 via the user interface. The computing device 105 detects 206 Mr Li's confirmation, and automatically uploads and transmits (block 207) the details about this fault tracing case from the computing apparatus 105 to the database 111 to be used as possible seed data for a drive fault diagnosis in the future.

In yet another example, Mr Li may command the computing apparatus 105 to generate and run 205 the troubleshooting wizard (as described above). If no solution is found (i.e. the drive fault does not get fixed), he confirms 206 to the computing apparatus 105 by means of the user interface that no solution was found. In response to detecting 206 the confirmation, the computing apparatus 105 gathers together the recorded information to form a support package, including source data as well as the details and results of each troubleshooting wizard step, and transmits 207 the data to the database 111. The computing apparatus 105 may also request 206 Mr Li to take photo of the drive 101 with the computing device 105, wherein the computing apparatus 105 may attach 207 the photo to the support package to be transmitted to the database 111. The computing apparatus 105 outputs 206 an inquiry requesting Mr Li to indicate whether he wants to create a support case. In response to recognizing a positive indication from Mr Li, the computing apparatus 105 creates the support case, and transmits 207 a support request to the cloud server 109. A remote user (e.g. Mr Nieminen in the drive support team in Helsinki) receives an indication on the support request in Mr Nieminen's terminal apparatus (remote computing apparatus) 112. Upon accepting the case, the support package is forwarded to the remote computing apparatus 112, including the information gathered during the earlier process. Mr Nieminen may contact Mr Li and they are able to co-operate (e.g. via a network connection 114 between Mr Li's user apparatus 105 and Mr Nieminen's terminal apparatus 112, or otherwise) to solve the issue with the drive 101. When the issue is solved, Mr Li and/or the user apparatus 105 complement the support package data with additional information accumulated when the issue was solved with Mr Li. This data is then transmitted to and stored to the database 111.

An embodiment also discloses a communications system for performing said method.

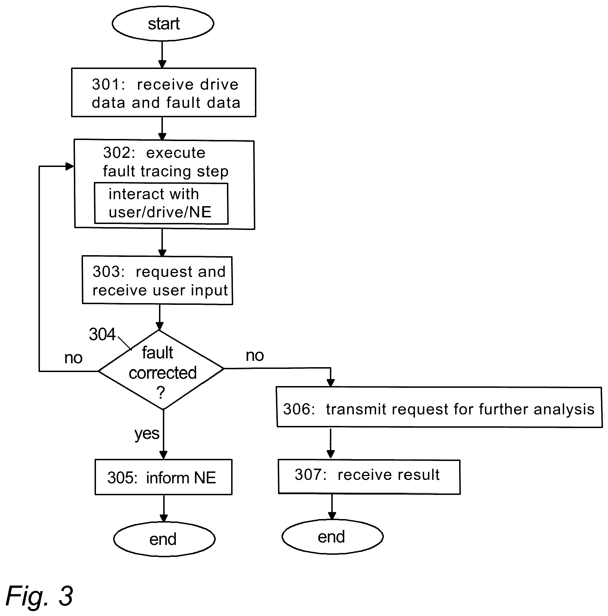

Figure 3 illustrates an exemplary process for drive fault management between a computing device 105 and network element of a cellular communication system, e.g. a network element 109.

Referring to Figure 3, the computing device, such as user apparatus 105, receives (block 301) the drive status data and the fault log data. Based on at least the received fault log data and device status data, the user apparatus 105 is configured to execute (block 302) one or more fault tracing steps related to the drive 101, in order to try to solve the fault situation. The executing 302 of at least one of the fault tracing steps may comprise, for example, outputting a drive related inquiry to a user and receiving a user response to the drive related inquiry, causing the running of one or more operational tests on the drive 101, requesting and receiving further drive related information from the drive 101 via the local connection network 104, requesting and receiving further drive related information from the remote apparatus 109 via the communications network 106, generating and outputting a drive related checklist to the user in respect of the fault, generating and outputting a drive related question to the user in respect of the fault, and/or generating and outputting a suggestion for a corrective action to the user in respect of the fault (instead of or in addition to the drive, these steps may relate to the device the drive is controlling).

The user apparatus 105 may output (block 303) a request (via an appropriate user interface in the user apparatus) to the user, requesting the user to indicate to the user apparatus 105 whether or not the fault was corrected. If a user indication (block 303, via an appropriate user interface (e.g. keyboard, touch display, microphone)) is detected (block 304) in the user apparatus 105 that the drive fault was not corrected, the user apparatus 105 may execute 302 at least one other or updated fault tracing steps related to the drive to try to solve the fault situation. Alternatively/in addition, the user apparatus 105 may cause (block 306) transmission of the fault log data, the device status data, information on the executed fault tracing step(s), and other debugging data (such as user-entered debugging data) related to the drive to a remote apparatus 109 (such as a cloud server), for further analysis of the fault. Despite of whether or not the fault was corrected 304, the user apparatus may cause (block 305) transmission of the fault log data, the device status data, the information on the executed fault tracing step(s), and the other debugging data to the remote apparatus 109 to be stored in a memory/database 111. At least part of that information may also be stored in an internal memory/database of the user apparatus 105.

Thus the computing apparatus 105 may interact 302 with at least one of the user, the drive 101 and the remote apparatus 109, 111 to obtain more information on at least the fault and/or the drive 101, and utilize the obtained information when generating/selecting/executing 302 the fault tracing steps.

The fault tracing step executed in the computing apparatus 105 may be selected based on information obtained from one or more earlier device fault tracing steps. This enables providing a self-learning system where the fault tracing steps may be dynamically customized for the drive 101 and the operational fault of the drive 101. This enables performing efficient drive self-diagnosis and drive self-diagnosis information sharing in the communications system. Despite of whether or not the drive fault was corrected, the computing apparatus 105 causes 305 transmission of the drive data, fault data, and information on the executed fault tracing step(s) and other debugging data to the remote apparatus 109. In item 307, the user apparatus 105 may receive the information on the result of the further fault analysis performed in the remote apparatus 109, and output said information to the user. This output information may further help the user to try to solve the issue with the drive 101. Based on the information received in step 307, one or more further fault tracing steps 302 may also be performed in the user apparatus 105 if needed/desired. The message 306 may comprise a request for performing a further fault analysis.

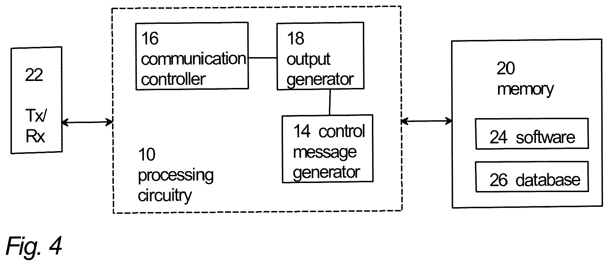

An embodiment provides an apparatus comprising at least one processor and at least one memory including a computer program code, wherein the at least one memory and the computer program code are configured, with the at least one processor, to cause the apparatus to carry out the procedures of the above-described user terminal or network node (user apparatus 105). The at least one processor, the at least one memory, and the computer program code may thus be considered as an embodiment of means for executing the above-described procedures of the user terminal or network node. Figure 4 illustrates a block diagram of a structure of such an apparatus. The apparatus may be comprised in the user terminal or in the network node, e.g. the apparatus may form a chipset or a circuitry in the user terminal or network node. In some embodiments, the apparatus is the user terminal or the network node. The apparatus comprises a processing circuitry 10 comprising the at least one processor. The processing circuitry 10 may comprise a communication controller 16 configured to receive the drive status data and the fault log data. The communication controller 16 may further be configured to, based on at least the received fault log data and device status data, to execute one or more fault tracing steps related to the drive, in order to try to solve the fault situation. The executing of at least one of the fault tracing steps may comprise, for example, outputting a drive related inquiry to a user and receiving a user response to the drive related inquiry, causing the running of one or more operational tests on the drive, requesting and receiving further drive related information from the drive via the local connection network 104, requesting and receiving further drive related information from the remote apparatus 109 via the communications network 106, generating and outputting a drive related checklist to the user in respect of the fault, generating and outputting a drive related question to the user in respect of the fault, and/or generating and outputting a suggestion for a corrective action to the user in respect of the fault (instead of or in addition to the drive, these steps may relate to the device the drive is controlling).

The processing circuitry 10 may further comprise an output generator 18 configured to output a request (via an appropriate user interface, not shown in Fig. 4) to the user, requesting the user to indicate whether or not the fault was corrected. The communication controller 16 is configured to detect a user indication (via an appropriate user interface (e.g. keyboard, touch display, microphone), not shown in Fig. 4) whether or not the drive fault was corrected. The communication controller 16 is configured to execute at least one other or updated fault tracing steps related to the drive to try to solve the fault situation, if required. Alternatively/in addition, a control message generator 14 may be configured to cause transmission of the fault log data, the device status data, information on the executed fault tracing step(s), and other debugging data (such as user-entered debugging data) related to the drive to a remote apparatus (such as a cloud server), for further analysis of the fault. Despite of whether or not the fault was corrected, the control message generator 14 may be configured to cause transmission of the fault log data, the device status data, the information on the executed fault tracing step(s), and the other debugging data to the remote apparatus 109 to be stored in a memory/database. At least part of that information may also be stored in an internal memory/database 26 of the apparatus 105.

The processing circuitry 10 may comprise the circuitries 14, 16, 18 as sub-circuitries, or they may be considered as computer program modules executed by the same physical processing circuitry. The memory 20 may store one or more computer program products 24 comprising program instructions that specify the operation of the circuitries 14, 16, 18. The memory 20 may further store a database 26 comprising definitions for downlink control channel signalling, for example. The apparatus may further comprise a radio interface 22 providing the apparatus with radio communication capability with the network elements. The radio interface may comprise a radio communication circuitry enabling wireless communications and comprise a radio frequency signal processing circuitry and a baseband signal processing circuitry. The baseband signal processing circuitry may be configured to carry out the functions of a transmitter and/or a receiver. In some embodiments, the radio interface may be connected to a remote radio head comprising at least an antenna and, in some embodiments, radio frequency signal processing in a remote location with respect to the base station. In such embodiments, the radio interface may carry out only some of radio frequency signal processing or no radio frequency signal processing at all. The connection between the radio interface and the remote radio head may be an analogue connection or a digital connection. In some embodiments, the radio interface may comprise a fixed communication circuitry enabling wired communications.

As used in this application, the term 'circuitry' refers to all of the following: (a) hardware-only circuit implementations such as implementations in only analog and/or digital circuitry; (b) combinations of circuits and software and/or firmware, such as (as applicable): (i) a combination of processor(s) or processor cores; or (ii) portions of processor(s)/software including digital signal processor(s), software, and at least one memory that work together to cause an apparatus to perform specific functions; and (c) circuits, such as a microprocessor(s) or a portion of a microprocessor(s), that require software or firmware for operation, even if the software or firmware is not physically present.

This definition of 'circuitry' applies to all uses of this term in this application. As a further example, as used in this application, the term "circuitry" would also cover an implementation of merely a processor (or multiple processors) or portion of a processor, e.g. one core of a multi-core processor, and its (or their) accompanying software and/or firmware. The term "circuitry" would also cover, for example and if applicable to the particular element, a baseband integrated circuit, an application-specific integrated circuit (ASIC), and/or a field-programmable grid array (FPGA) circuit for the apparatus according to an embodiment of the invention.

The processes or methods described above in connection with Figures 1 to 4 may also be carried out in the form of one or more computer process defined by one or more computer programs. The computer program shall be considered to encompass also a module of a computer programs, e.g. the above-described processes may be carried out as a program module of a larger algorithm or a computer process. The computer program(s) may be in source code form, object code form, or in some intermediate form, and it may be stored in a carrier, which may be any entity or device capable of carrying the program. Such carriers include transitory and/or non-transitory computer media, e.g. a record medium, computer memory, read-only memory, electrical carrier signal, telecommunications signal, and software distribution package. Depending on the processing power needed, the computer program may be executed in a single electronic digital processing unit or it may be distributed amongst a number of processing units.

The present invention is applicable to cellular or mobile communication systems defined above but also to other suitable communication systems. The protocols used, the specifications of cellular communication systems, their network elements, and terminal devices develop rapidly. Such development may require extra changes to the described embodiments. Therefore, all words and expressions should be interpreted broadly and they are intended to illustrate, not to restrict, the embodiment.

In addition to a drive/frequency converter, an embodiment may also be applicable to other automated power conversion devices such as AC/DC modules, DC/AC modules, DC/DC modules, programmable logic controllers (PLC), switches, motion controllers, motion drives, servo motors, soft starters, robotics, cars, heavy equipment, and/or any other devices used for industrial automation.

It will be obvious to a person skilled in the art that, as the technology advances, the inventive concept can be implemented in various ways. The invention and its embodiments are not limited to the examples described above but may vary within the scope of the claims.

## Claims

1. A computerized method for fault management of an automated power conversion device, the method comprising
receiving, in a computing apparatus, at least device fault log data and device status data from the automated power conversion device via a local connection network;
based on at least the received data, executing, in the computing apparatus, one or more fault tracing steps related to the device,
wherein a fault tracing step comprises
- outputting a device related inquiry to a user and receiving a user response to the device related inquiry,
- causing the running of one or more operational tests on the device,
- requesting and receiving further device related information from the device via the local connection network,
- requesting and receiving further device related information from a remote apparatus via a communications network,
- generating and outputting a device related checklist to the user in respect of the fault,
- generating and outputting a device related question to the user in respect of the fault, and
- generating and outputting a suggestion for a corrective action to the user in respect of the fault;
wherein the device status data comprises device identification data and device related information on one or more of power-on time, motor running hours, fan running hours, estimation of direct current link capacitor lifetime, load current histogram, ambient temperature, insulated gate bipolar transistor temperature, control board temperature, frequency, direct current link voltage and motor current.

2. A method according to claim 1, wherein the method comprises
detecting, in the computing apparatus, a user input indicating that the fault was not corrected, wherein the method further comprises
causing, in the computing apparatus, transmission of the fault log data, the device status data, information on an executed fault tracing step, and optionally other debugging data regarding the device, to the remote apparatus, for further analysis of the fault.

3. A method according to claim 1 or 2, wherein the method comprises requesting, in the computing apparatus, the user to indicate to the computing apparatus if the fault was corrected.

4. A method according to any one of the preceding claims, wherein a fault tracing step to be executed is selected in the computing apparatus based on information obtained from one or more previously executed fault tracing steps.

5. A method according to any one of the preceding claims, wherein a fault tracing step to be executed is selected in the computing apparatus based on information stored in at least one of the computing apparatus, the remote apparatus, and the device.

6. A method according to any one of the preceding claims, wherein a fault tracing step to be executed is selected in the computing apparatus based on user-entered information.

7. A method according to any of the preceding claims, wherein the fault tracing step to be executed is dynamically customized for at least one of
the device, and
the operational fault of the device.

8. A method according to any of the preceding claims, wherein the method comprises causing storing, in a memory, associated information on one or more of
the suggestion for the corrective action;
whether or not the fault was corrected;
the fault tracing step,
the fault log data,
the device status data,
the further device related information,
the device related inquiry and the user response,
the operational test,
a result of the operational test,
the device related checklist,
the device related question,
user-entered information,
other debugging data;
a further fault analysis, and
a result of the further fault analysis.

9. A method according to claim 8, wherein the method comprises in the computing apparatus
retrieving the stored associated information from the memory; and
utilizing the retrieved information as source information when executing a subsequent fault tracing step related to the same or different device.

10. A method according to claim 2 or 8, wherein the other debugging data comprises user-entered debugging data.

11. A method according to any of the preceding claims, wherein
the fault log data comprises a fault code recorded in the device when the fault occurred; and
the device status data comprises device identification information, and internal variables and key performance indicators on the condition of the device.

12. A method according to any of the preceding claims, wherein the computing apparatus comprises a mobile device and the automated power conversion device comprises a drive.

13. An apparatus comprising
at least one processor; and
at least one memory including a computer program code, wherein the at least one memory and the computer program code are configured, with the at least one processor, to cause the apparatus to perform any of the method steps of claims 1 to 12.

14. A computer program product embodied on a distribution medium readable by a computer and comprising program instructions which, when loaded into an apparatus, execute the method according to any preceding claim 1 to 12.

15. A system comprising a drive and a local connection network, wherein the system further comprises the apparatus of claim 13.

## Patentansprüche

1. Computerisiertes Verfahren zur Fehlerverwaltung einer automatischen Stromumwandlungsvorrichtung, wobei das Verfahren umfasst:
in einer Recheneinrichtung, Empfangen von mindestens Vorrichtungsfehlerprotokolldaten und Vorrichtungszustandsdaten von der automatischen Stromumwandlungsvorrichtung über ein lokales Verbindungsnetzwerk;
basierend auf mindestens den empfangenen Daten, in der Recheneinrichtung, Ausführen von einem oder mehreren Fehlersuchschritten in Bezug auf die Vorrichtung,
wobei ein Fehlersuchschritt umfasst:
- Ausgeben einer vorrichtungsbezogenen Anfrage an einen Benutzer und Empfangen einer Benutzerantwort auf die vorrichtungsbezogene Anfrage,
- Bewirken von einem oder mehreren Betriebstests auf der Vorrichtung,
- Anfordern und Empfangen weiterer vorrichtungsbezogener Informationen von der Vorrichtung über das lokale Verbindungsnetzwerk,
- Anfordern und Empfangen weiterer vorrichtungsbezogener Informationen von einer entfernten Vorrichtung über ein Kommunikationsnetzwerk,
- Erzeugen und Ausgeben einer vorrichtungsbezogenen Checkliste an den Benutzer mit Bezug auf den Fehler,
- Erzeugen und Ausgeben einer vorrichtungsbezogenen Frage an den Benutzer mit Bezug auf den Fehler, und
- Erzeugen und Ausgeben eines Vorschlags für eine Korrekturmaßnahme an den Benutzer mit Bezug auf den Fehler;
wobei die Vorrichtungszustandsdaten Vorrichtungsidentifikationsdaten und vorrichtungsbezogene Informationen über eines oder mehrere von Einschaltzeit, Motorbetriebsstunden, Lüfterbetriebsstunden, Schätzung der Lebensdauer des Gleichstromverbindungskondensators, Laststromhistogramm, Umgebungstemperatur, Temperatur des Bipolartransistors mit isolierter Gate-Elektrode (Insulated Gate Bipolar Transistor - IGBT), Schalttafeltemperatur, Frequenz, Gleichstromverbindungsspannung und Motorstrom betreffen.

2. Verfahren nach Anspruch 1, wobei das Verfahren umfasst:
in der Recheneinrichtung, Feststellen einer Benutzereingabe, die angibt, dass der Fehler nicht korrigiert wurde, wobei das Verfahren ferner umfasst:
in der Recheneinrichtung, Bewirken der Übertragung der Fehlerprotokolldaten, der Vorrichtungszustandsdaten, Informationen über einen ausgeführten Fehlersuchschritt und wahlweise andere Fehlerbeseitigungsdaten, die die Vorrichtung betreffen, an die entfernte Einrichtung zur weiteren Analyse des Fehlers.

3. Verfahren nach Anspruch 1 oder 2, wobei das Verfahren in der Recheneinrichtung das Auffordern des Benutzers, der Recheneinrichtung anzugeben, ob der Fehler korrigiert wurde, umfasst.

4. Verfahren nach einem der vorhergehenden Ansprüche, wobei ein Fehlersuchschritt, der auszuführen ist, in der Recheneinrichtung basierend auf Informationen ausgewählt wird, die von einem oder mehreren zuvor ausgewählten Fehlersuchschritten erhalten werden.

5. Verfahren nach einem der vorhergehenden Ansprüche, wobei ein auszuführender Fehlersuchschritt in der Recheneinrichtung basierend auf Informationen ausgewählt wird, die in mindestens einem von der Recheneinrichtung, der entfernten Einrichtung und der Vorrichtung gespeichert sind.

6. Verfahren nach einem der vorhergehenden Ansprüche, wobei ein auszuführender Fehlersuchschritt in der Recheneinrichtung basierend auf durch den Benutzer eingegebenen Informationen ausgewählt wird.

7. Verfahren nach einem der vorhergehenden Ansprüche, wobei der auszuführende Fehlersuchschritt dynamisch spezifisch angepasst wird für mindestens eines von:
der Vorrichtung, und
dem Betriebsfehler der Vorrichtung.

8. Verfahren nach einem der vorhergehenden Ansprüche, wobei das Verfahren das Bewirken des Speicherns zugehöriger Informationen über eines oder mehrere von Folgendem in einem Speicher umfasst:
den Vorschlag für die Korrekturmaßnahme;
ob der Fehler korrigiert wurde oder nicht;
den Fehlerverfolgungsschritt,
die Fehlerprotokolldaten,
die Vorrichtungszustandsdaten
die weiteren vorrichtungsbezogenen Informationen,
die vorrichtungsbezogene Anfrage und die Benutzerantwort,
den Betriebstest,
ein Ergebnis des Betriebstests,
die vorrichtungsbezogene Checkliste,
die vorrichtungsbezogene Frage,
durch den Benutzer eingegebene Informationen,
andere Fehlerbeseitigungsdaten,
eine weitere Fehleranalyse, und
ein Ergebnis der weiteren Fehleranalyse.

9. Verfahren nach Anspruch 8, wobei das Verfahren in der Recheneinrichtung umfasst:
Abrufen der gespeicherten verknüpften Informationen von dem Speicher; und
Nutzen der abgerufenen Informationen als Quellinformationen beim Ausführen eines nachfolgenden Fehlersuchschritts, der die gleiche oder eine unterschiedliche Vorrichtung betrifft.

10. Verfahren nach Anspruch 2 oder 8, wobei die anderen Fehlerbeseitigungsdaten durch den Benutzer eingegebene Fehlerbeseitigungsdaten umfassen.

11. Verfahren nach einem der vorhergehenden Ansprüche, wobei
die Fehlerprotokolldaten einen Fehlercode umfassen, der in der Vorrichtung aufgezeichnet wurde, als der Fehler auftrat; und
die Vorrichtungszustandsdaten Vorrichtungsidentifikationsinformationen und interne Variablen und Leistungskennzahlen über den Zustand der Vorrichtung umfassen.

12. Verfahren nach einem der vorhergehenden Ansprüche, wobei die Recheneinrichtung eine mobile Vorrichtung umfasst und die automatische Stromumwandlungsvorrichtung ein Laufwerk umfasst.

13. Einrichtung, die umfasst:
mindestens einen Prozessor; und
mindestens einen Speicher, der einen Computerprogrammcode umfasst, wobei der mindestens eine Speicher und der Computerprogrammcode ausgestaltet sind, um mit dem mindestens einen Prozessor zu bewirken, dass die Einrichtung einen von den Verfahrensschritten nach Anspruch 1 bis 12 durchführt.

14. Computerprogrammprodukt, das auf einem Verteilungsmedium ausgeführt ist, das durch einen Computer lesbar ist und Programmbefehle umfasst, die, wenn sie in eine Einrichtung geladen werden, das Verfahren nach einem der vorhergehenden Ansprüche 1 bis 12 ausführen.

15. System, das ein Laufwerk und ein lokales Verbindungsnetzwerk umfasst, wobei das System ferner die Einrichtung nach Anspruch 13 umfasst.

## Revendications

1. Procédé informatisé pour une gestion de défaut d'un dispositif de conversion de puissance automatisé, le procédé comprenant
la réception, dans un appareil informatique, d'au moins des données de journal de défauts de dispositif et des données d'état de dispositif en provenance du dispositif de conversion de puissance automatisé via un réseau de connexion local ;
sur la base d'au moins les données reçues, l'exécution, dans l'appareil informatique, d'une ou plusieurs étapes de traçage de défaut liées au dispositif,
dans lequel une étape de traçage de défaut comprend :
- la sortie d'une interrogation liée au dispositif vers un utilisateur et la réception d'une réponse d'utilisateur à l'interrogation liée au dispositif,
- le fait de provoquer l'exécution d'un ou plusieurs tests opérationnels sur le dispositif,
- la demande et la réception d'informations supplémentaires liées au dispositif en provenance du dispositif via le réseau de connexion local,
- la demande et la réception d'informations supplémentaires liées au dispositif en provenance d'un appareil distant via un réseau de communications,
- la génération et la sortie d'une liste de vérification liée au dispositif vers l'utilisateur en ce qui concerne le défaut,
- la génération et la sortie d'une question liée au dispositif vers l'utilisateur en ce qui concerne le défaut, et
- la génération et la sortie d'une suggestion pour une action corrective vers l'utilisateur en ce qui concerne le défaut ;
dans lequel les données d'état de dispositif comprennent des données d'identification de dispositif et des informations liées au dispositif sur un ou plusieurs parmi un temps de mise sous tension, des heures de marche de moteur, des heures de marche de ventilateur, une estimation de durée de vie de condensateur de liaison de courant continu, un histogramme de courant de charge, une température ambiante, une température de transistor bipolaire à porte isolée, une température de tableau de commande, une fréquence, une tension de liaison de courant continu et un courant de moteur.

2. Procédé selon la revendication 1, dans lequel le procédé comprend
la détection, dans l'appareil informatique, d'une entrée d'utilisateur indiquant que le défaut n'a pas été corrigé, dans lequel le procédé comprend en outre
le fait de provoquer, dans l'appareil informatique, la transmission des données de journal de défauts, des données d'état de dispositif, des informations sur une étape de traçage de défaut exécutée, et facultativement d'autres données de débogage concernant le dispositif, vers l'appareil distant, pour une analyse complémentaire du défaut.

3. Procédé selon la revendication 1 ou 2, dans lequel le procédé comprend la demande, dans l'appareil informatique, à l'utilisateur d'indiquer à l'appareil informatique si le défaut a été corrigé.

4. Procédé selon l'une quelconque des revendications précédentes, dans lequel une étape de traçage de défaut à exécuter est sélectionnée dans l'appareil informatique sur la base d'informations obtenues à partir d'une ou plusieurs étapes de traçage de défaut exécutées précédemment.

5. Procédé selon l'une quelconque des revendications précédentes, dans lequel une étape de traçage de défaut à exécuter est sélectionnée dans l'appareil informatique sur la base d'informations stockées dans au moins l'un parmi l'appareil informatique, l'appareil distant, et le dispositif.

6. Procédé selon l'une quelconque des revendications précédentes, dans lequel une étape de traçage de défaut à exécuter est sélectionnée dans l'appareil informatique sur la base d'informations entrées par l'utilisateur.

7. Procédé selon l'une quelconque des revendications précédentes, dans lequel l'étape de traçage de défaut à exécuter est personnalisée dynamiquement pour au moins l'un
du dispositif, et
du défaut opérationnel du dispositif.

8. Procédé selon l'une quelconque des revendications précédentes, dans lequel le procédé comprend le fait de provoquer le stockage, dans une mémoire, d'informations associées sur un ou plusieurs parmi
la suggestion pour l'action corrective ;
si le défaut a été corrigé ou non ;
l'étape de traçage de défaut,
les données de journal de défauts,
les données d'état de dispositif,
les informations supplémentaires liées au dispositif,
l'interrogation liée au dispositif et la réponse d'utilisateur,
le test opérationnel,
un résultat du test opérationnel,
la liste de vérification liée au dispositif,
la question liée au dispositif,
des informations entrées par l'utilisateur,
d'autres données de débogage ;
une analyse de défaut complémentaire, et
un résultat de l'analyse de défaut complémentaire.

9. Procédé selon la revendication 8, dans lequel le procédé comprend dans l'appareil informatique,
la récupération des informations associées stockées à partir de la mémoire ; et
l'utilisation des informations récupérées en tant qu'informations source lors de l'exécution d'une étape de traçage de défaut subséquente liée au même dispositif ou à un dispositif différent.

10. Procédé selon la revendication 2 ou 8, dans lequel les autres données de débogage comprennent des données de débogage entrées par l'utilisateur.

11. Procédé selon l'une quelconque des revendications précédentes, dans lequel
les données de journal de défauts comprennent un code de défaut enregistré dans le dispositif lorsque le défaut s'est produit ; et
les données d'état de dispositif comprennent des informations d'identification de dispositif, et des variables internes et des indicateurs de performance clés sur la condition du dispositif.

12. Procédé selon l'une quelconque des revendications précédentes, dans lequel l'appareil informatique comprend un dispositif mobile et le dispositif de conversion de puissance automatisé comprend un lecteur.

13. Appareil comprenant
au moins un processeur ; et
au moins une mémoire incluant un code de programme d'ordinateur, dans lequel l'au moins une mémoire et le code de programme d'ordinateur sont configurés, avec l'au moins un processeur, pour amener l'appareil à effectuer l'une quelconque des étapes de procédé des revendications 1 à 12.

14. Produit de programme d'ordinateur incorporé sur un support de distribution lisible par un ordinateur et comprenant des instructions de programme qui, lorsqu'elles sont chargées dans un appareil, exécutent le procédé selon une quelconque revendication 1 à 12 précédente.

15. Système comprenant un lecteur et un réseau de connexion local, dans lequel le système comprend en outre l'appareil de la revendication 13.
